# EUROPÄISCHE PATENTANMELDUNG

(11) **EP 2 028 379 A2**
(43) Veröffentlichungstag der Anmeldung: **25.02.2009**
(21) Anmeldenummer: 08162697.0
(22) Anmeldetag: 20.08.2008
(51) Int. Cl.: F15B 19/00, F15B 13/08, F16K 37/00

(54) **Ventilanordnung mit Diagnosemitteln zum Feststellen eines Wartungsbedarfs**

(30) Priorität: 22.08.2007 DE 102007039663
(71) Anmelder: Robert Bosch GmbH, 70442 Stuttgart (DE)
(72) Erfinder: Marais, Ludovic, 74130, Ayze (FR); Albert, Gerhard, 71732, Tamm (DE)
(74) Vertreter: Kietzmann, Lutz

(57) **Zusammenfassung**

Ventilanordnung zum Schalten eines Druckmittelflusses mit mindestens einem über ein zugeordnetes elektromagnetisches Pilotventil (2) betätigbares Hauptventil, welchem Diagnosemittel zum Ermitteln des Wartungsbedarfs zugeordnet sind, wobei die Diagnosemittel einen Druckregler (4) umfassen, welcher den vom mindestens einen Pilotventil (2) geschalteten Steuerdruck auf Anforderung soweit unterhalb des normalen Steuerdrucks absenkt, dass bei einem hierdurch ausgelösten Schaltversagen des Hauptventils auf einen Wartungsbedarf rückschließbar ist.

## Beschreibung

Die vorliegende Erfindung betrifft eine Ventilanordnung zum Schalten eines Druckmittelflusses mit mindestens einem über ein zugeordnetes elektromagnetisches Pilotventil betätigbares Hauptventil, welchem Diagnosemittel zum Feststellen eines Wartungsbedarfs zugeordnet sind.

Das Einsatzgebiet der vorliegenden Erfindung erstreckt sich vornehmlich auf Ventilanordnungen mit Ventilen in Sitz- oder Schieberventilbauweise. Insbesondere Schieberventile werden im Rahmen pneumatischer Automatisierungssysteme zu örtlich konzentrierten sogenannten Ventileinheiten zusammengefasst. Hierbei werden mehrere Ventile über ihre Seitenflächen aneinandergereiht, wodurch eine gemeinsame Versorgung mit einem Speisedruck möglich ist und auch die elektrische Verdrahtung, insbesondere zur Ansteuerung der Pilotventile, unter geringem Aufwand herstellbar ist.

Bei vorgesteuerten Ventilanordnung der hier interessierenden Art wird das Pilotventil meist stirnseitig an einem Gehäuse des Hauptventils angebracht. Über das Pilotventil lässt sich eine Vorsteuerung für das Ventilglied des Hauptventils mit einem Steuerdruck beaufschlagen. Ist das Steuerglied ein Ventilschieber, so bewirkt der Steuerdruck eine Axialverstellung, durch welche äußere Anschlüsse am Hauptventil druckmittelvermittelnd miteinander verbunden werden. Eine derartige Schaltmechanik kann sowohl federrückgestellt als auch aktiv bidirektional angetrieben werden. Die elektrischen Ansteuersignale für das mindestens eine Pilotventil pro Hauptventil wird von einer übergeordneten Steuereinheit generiert, welche die Aktionen aller Hauptventile und sonstiger aktiven Bestandteile eines pneumatischen Automatisierungssystems koordiniert. Darüber hinaus werden in jüngster Zeit durch die Elektronik auch andere Funktionen, wie Diagnosefunktionen zum Ermitteln des Verschleißzustandes von Aktuatoren eines pneumatischen Systems wahrgenommen.

Aus der DE 102 22 890 A1 geht eine gattungsgemäße Ventilanordnung hervor, welche mit elektronischen Diagnosemitteln zum Ermitteln des Verschleißzustandes ausgestattet ist. Hierbei handelt es sich um eine Steuereinheit, welcher eingangsseitig das elektrische Ansteuersignal und ein auf ein Ansteuerimpuls folgendes elektrisches Reaktionssignal zugeht. Hieraus ermittelt die Steuereinheit durch Vergleich den zeitlichen Abstand zwischen dem Ansteuersignal und dem Reaktionssignal. Hieraus lässt sich die Schaltverzögerung des Hauptventils ermitteln. Bei dieser Lösung des Standes der Technik wird die Schaltverzögerung als Maß des Verschleißzustandes der Schaltmechanik verwendet. Denn eine zunehmende Verlängerung der Schaltzeit eines Mehrwegeventils über dessen Lebenszeit steht im direkten Zusammenhang mit dem Verschleißzustand. Diese technische Lösung ermöglicht somit über eine rechtzeitige Erkennung unerwünscht langer Schaltzeiten einen gezielten Austausch von Ventilen oder deren Verschleißteile, wie Dichtringen, welche in absehbarer Zeit ganz ausfallen würden. Damit ist eine präventive Wartung pneumatischer Systeme gewährleistbar. Nachteilig bei dieser technischen Lösung erscheint allerdings die hierfür erforderliche aktive Sensorik, welche über eine entsprechende Verdrahtung mit der elektronischen Steuereinheit zu verbinden ist. Ferner ist diese technische Lösung für eine permanenten Überwachung der Schaltverzögerung eines Ventils gedacht; zur Bestimmung des Wartungszustandes erscheint dies jedoch nicht unbedingt erforderlich.

Es ist daher die Aufgabe der vorliegenden Erfindung, eine Ventilanordnung mit Diagnosemitteln zum Feststellen eines Wartungsbedarfs zu schaffen, welche mit einfachem technischen Aufwand eine zuverlässige Erkennung des Verschleißzustandes gestattet.

Die Aufgabe wird ausgehend von einer Ventilanordnung gemäß dem Oberbegriff von Anspruch 1 in Verbindung mit dessen kennzeichnenden Merkmalen gelöst. Die nachfolgenden abhängigen Ansprüche geben vorteilhafte Weiterführungen der Erfindung an.

Die Erfindung schließt die technische Lehre ein, dass die Diagnosemittel einen Druckregler umfassen, welcher den vom mindestens einen Pilotventil geschalteten Steuerdruck auf Anforderung soweit unterhalb des normalen Schaltdrucks absenkt, dass bei einem hierdurch ausgelösten Schaltversagen des Hauptventils auf einen Wartungsbedarf rückschließbar ist. Das Schaltversagen wird in diesem Fall also informationstechnisch als Wartungsbedarf interpretiert, um diesen vorzugsweise optisch zur Anzeige zu bringen.

Der Vorteil der erfindungsgemäßen Lösung besteht insbesondere darin, dass eine Verschleißzustandserkennung unter Verwendung eines einfachen Bauelements in Form eines Druckreglers möglich ist. Durch die hierdurch gestaltbare präventive Diagnose kann ein Fertigungsstillstand eines pneumatischen Systems vermieden werden. Anstehende Wartungen lassen sich vor Ausfall eines Ventils rechtzeitig planen. Die erfindungsgemäße Lösung lässt sich zudem hinsichtlich von Prüfzyklen und der Bemessung des abgesenkten Schaltdrucks flexibel an den zu überwachenden Ventiltyp und andere Randbedingungen anpassen.

Vorzugsweise ist der im Rahmen der Diagnosemittel zum Einsatz kommende Druckregler nach Art eines elektrisch ansteuerbaren Proportionaldruckreglers ausgebildet. Proportionaldruckregler zeichnen sich durch eine hohe Regelgüte entsprechend einer elektrischen Sollwertvorgabe aus. Der im Rahmen der Erfindung zum Einsatz kommende Druckregler kann neben der Einstellung des abgesenkten Schaldrucks auch dafür genutzt werden, den normalen Schaltdruck für die Vorsteuerung nach Maßgabe einer entsprechenden Sollwertvorgabe konstant zu halten. Ein weiterer Druckregler für diese Funktion kann somit entfallen.

Vorzugsweise beträgt im Rahmen der erfindungsgemäßen Lösung der normale Schaltdruck der Vorsteuerung für ein pneumatisches System zwischen 5 und 7 bar, wobei es sich als sinnvoll erwiesen hat, den korrespondierend abgesenkten Schaltdruck wenigstens 1 bar geringer zu wählen. Durch diese Abstufung kann eine zuverlässige Diagnose sichergestellt werden. Vorzugsweise beträgt der abgesenkte Schaltdruck im Rahmen der vorgenannten Aussetzung 4 bis 6 bar, ganz vorzugsweise 3 bis 4 bar.

Gemäß einer weiteren, die Erfindung verbessernden Maßnahme wird vorgeschlagen, dass mehrere Hauptventile mit je mindestens einem zugeordneten Pilotventil aneinandergereiht eine Ventileinheit bildend über einen einzigen Druckregler als Bestandteil einer gemeinsamen Diagnoseeinrichtung versehen sind. Mit diesem einzigen Druckregler kann für die gesamte Ventileinheit eine Diagnose des Wartungsbedarfs der hierin zusammengefassten einzelnen Hauptventile erfolgen. Zu diesem Zweck bietet es sich an, die Ventileinheit mit einem gefassten Zulaufanschluss für den Steuerdruck und den Speisedruck auszustatten. An einen für alle Ventile gemeinsamen Speisedruckkanal der Ventileinheit ist der Druckregler angeschlossen, welcher zum einen den normalen Schaltdruck für die Vorsteuerung konstant hält und zum Anderen bei Bedarf nach Maßgabe einer entsprechenden elektrischen Sollwertvorgabe den erfindungsgemäßen abgesenkten Schaltdruck zur Verfügung steht, um eine Diagnose der Ventile hinsichtlich Wartungsbedarf durchzuführen. Der Druckregler befindet sich dabei vorzugsweise auf dem ersten Ventilplatz.

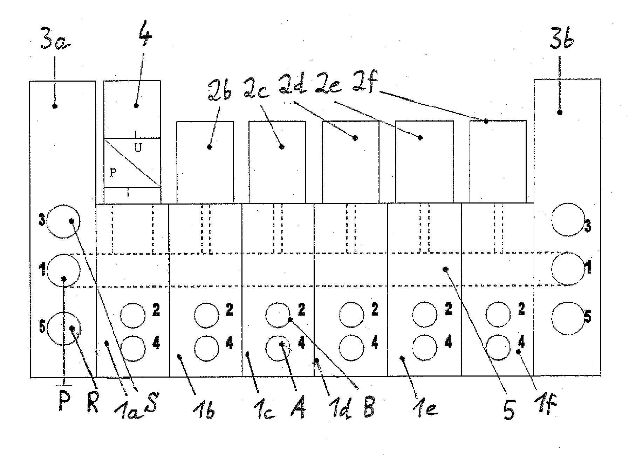

Weitere, die Erfindung verbessernde Maßnahmen werden nachstehend gemeinsam mit der Beschreibung eines bevorzugten Ausführungsbeispiels der Erfindung anhand der einzigen Figur näher dargestellt. Die Figur zeigt eine schematische Darstellung einer Ventileinheit mit Diagnosemitteln zum Feststellen eines Wartungsbedarfs.

Gemäß Figur umfasst die Ventileinheit mehrere Grundplattenelemente 1a-1f, welche jeweils einen Ventilplatz darstellen. Jedes Grundplattenelement 1a-1f dient der fluidischen Versorgung und weist außerdem frontseitige Arbeitsanschlüsse A und B auf. Den Grundplattenelementen 1b bis 1f ist jeweils ein Hauptventil - nicht erkennbar - mit angeschlossenem Pilotventil 2b-2f zugeordnet. Die Grundplattenelemente 1a-1f grenzen jeweils stirnseitig an Endplatten 3a bzw. 3b, die jeweils mit einem pneumatischen Anschluss P zur Speisedruckversorgung sowie zwei Entlüftungsanschlüsse R und S ausgestattet sind. Das zu dem Endplattenelement 3a benachbarte Grundplattenelement 1a (erster Ventilplatz) ist ein Druckregler 4 angeordnet, der Bestandteil der erfindungsgemäßen Diagnosemittel ist. Der Druckregler 4 regelt gemäß einer elektrischen Sollwertvorgabe den Druck innerhalb des alle Grundplattenelemente 1a bis 1f durchsetzenden Speisedruckkanals 5.

Im normalen Betrieb wird der Druck im Speisedruckkanal 5 durch den nach Art eines Proportionalreglers ausgebildeten Druckregler 4 auf einem normalen Schaltdruck von 6 bar eingestellt. Alle angeschlossenen Hauptventile, die über die Pilotventile 2b bis 2f per Vorsteuerung betrieben werden, sollten dann normal arbeiten. Zu festgelegten Zeiten, beispielsweise wöchentlich, wird durch den Druckregler 4 ausgehend von einer elektronischen Steuereinheit 6 ein abgesenkter Schaltdruck von 4 bar im Speisedruckkanal 5 eingestellt. Wenn auch bei diesem abgesenkten Schaltdruck alle Ventile schalten, sind diese einsatzbereit, dürfen also in nächster Zukunft keiner Wartung. Schaltet dagegen eines der Ventile nicht, besteht gezielter Wartungsbedarf.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, nur ein vorgesteuertes Hauptventil über erfindungsgemäße Diagnosemittel hinsichtlich des Wartungsbedarfs zu überwachen. Dabei kann das Hauptventil auch mit zwei Pilotventilen zur Ausführung einer bistabilen Ventilfunktion versehen sein. Bezugszeichenliste
- **1**: Grundplattenelement
- **2**: Pilotventil
- **3**: Endplattenelement
- **4**: Druckregler
- **5**: Speisedruckkanal
- **6**: Steuereinheit

## Patentansprüche

1. Ventilanordnung zum Schalten eines Druckmittelflusses mit mindestens einem über ein zugeordnetes elektromagnetisches Pilotventil (2) betätigbares Hauptventil, welchem Diagnosemittel zum Ermitteln des Wartungsbedarfs zugeordnet sind,
**dadurch gekennzeichnet, dass** die Diagnosemittel einen Druckregler () umfassen, welcher den vom mindestens einen Pilotventil (2) geschalteten Steuerdruck auf Anforderung soweit unterhalb des normalen Steuerdrucks absenkt, dass bei einem hierdurch ausgelösten Schaltversagen des Hauptventils auf einen Wartungsbedarf rückschließbar ist.

2. Ventilanordnung nach Anspruch 1,
**dadurch gekennzeichnet, dass** der Druckregler (4) nach Art eines elektrisch ansteuerbaren Proportionaldruckreglers ausgebildet ist.

3. Ventilanordnung nach Anspruch 1,
**dadurch gekennzeichnet, dass** der Druckregler (4) neben der Einstellung des abgesenkten Schaltdrucks während der Prüfung auch dem Konstanthalten des normalen Schaltdrucks während des Betriebs dient.

4. Ventilanordnung nach Anspruch 1,
**dadurch gekennzeichnet, dass** der normale Schaltdruck im Bereich zwischen 5 bis 7 bar liegt, und dass der hierzu korrespondierende abgesenkte Schaltdruck wenigstens ein bar geringer ist.

5. Ventilanordnung nach Anspruch 4,
**dadurch gekennzeichnet, dass** der abgesenkte Schaltdruck im Bereich zwischen 3 bis 4 bar liegt.

6. Ventilanordnung nach einem der vorstehenden Ansprüche,
**dadurch gekennzeichnet, dass** eine zentrale Steuereinheit (6) den Druckregler (4) in definierten äquidistanten Zeitabständen zur Ermittlung des aktuellen Verschleißzustandes aktiviert, sowie das Diagnoseergebnis ermittelt und auswertet.

7. Ventilanordnung nach einem der vorstehenden Ansprüche,
**dadurch gekennzeichnet, dass** mehrere Hauptventile mit je mindestens einem zugeordneten Pilotventil (2b-2f) aneinander gereiht eine Ventileinheit bilden, welche einen einzigen zugeordneten Druckregler (4) als Bestandteil der Diagnosemittel umfasst.

8. Ventilanordnung nach Anspruch 7,
**dadurch gekennzeichnet, dass** die Ventileinheit mit einem gefassten Zulaufanschluss (P) für den Steuerdruck sowie den Speisedruck für die angeschlossenen Hauptventile ausgestattet ist.

9. Ventilanordnung nach Anspruch 7 oder 8,
**dadurch gekennzeichnet, dass** der über den Zulaufanschluss (P) eingehende Steuerdruck über den am ersten Ventilplatz angeordneten Druckregler (4) geschleift ist.
